# EUROPÄISCHE PATENTSCHRIFT

(11) **EP 3 681 732 B1**
(45) Veröffentlichungstag und Bekanntmachung des Hinweises auf die Patenterteilung: **23.02.2022**
(21) Anmeldenummer: 18773363.9
(22) Anmeldetag: 11.09.2018
(51) Int. Cl.: B60B 33/00

(54) **FORMSCHLUSS-FESTSTELLEINRICHTUNG FÜR EINE ROLLE**
FORMFITTING SECURING DEVICE FOR A ROLLER
DISPOSITIF D'ARRÊT À COMPLÉMENTARITÉ DE FORME CONÇU POUR UN ROULEAU

(30) Priorität: 13.09.2017 DE 102017121146
(43) Veröffentlichungstag der Anmeldung: 22.07.2020
(73) Patentinhaber: Tente GmbH & Co. KG, 42929 Wermelskirchen (DE)
(72) Erfinder: MOLOZIS, Athanasios, 42289 Wuppertal (DE)
(74) Vertreter: Müller, Enno
(86) Internationale Anmeldenummer: PCT/EP2018/074454
(87) Internationale Veröffentlichungsnummer: WO 2019/053004

(56) Entgegenhaltungen:
- EP-A1- 2 081 778
- DE-U1-202017 100 939
- DE-U1-202017 102 277
- US-A1- 2009 113 671

## Beschreibung

### Gebiet der Technik

Die Erfindung betrifft eine Formschluss-Feststelleinrichtung für eine Rolle nach den Merkmalen des Oberbegriffes des Anspruches 1.

### Stand der Technik

Formschluss-Feststelleinrichtungen der in Rede stehenden Art sind bekannt, so insbesondere bei Rollen, aufweisend ein Laufrad und eine Gabel, weiter gegebenenfalls einen Montagezapfen. Über die Formschluss-Feststelleinrichtung ist das Laufrad der Rolle mit Bezug auf die geometrische Laufradachse drehblockierbar. Hierzu ist das Drehblockier-Eingriffsteil, das bei bekannten Lösungen beispielsweise gabel- oder montagezapfenseitig angeordnet ist, in eine Eingriffsstellung mit zumindest einem laufradseitigen Gegeneingriffsteil in Formschlussstellung. In diesem Zusammenhang ist es weiter bekannt, laufradseitig eine bezüglich der Laufradachse umlaufende Verzahnung vorzusehen, in die das Drehblockier-Eingriffsteil zur Aktivierung der Formschluss-Feststelleinrichtung eingreifen kann.

Auch ist es bekannt, ein solches Drehblockier-Eingriffsteil in der Eingriffsstellung mittels einer Feder in Richtung auf die Eingriffsstellung vorgespannt zu belasten.

In diesem Zusammenhang wird beispielsweise auf die EP 2 081 778 B1 verwiesen. Aus dieser ist eine Rolle, hier eine Lenkrolle, die neben der Drehbeweglichkeit des Laufrades auch eine Schwenkbeweglichkeit der Rolle insgesamt um eine im Nutzungszustand im Wesentlichen vertikale Schwenkachse aufweist, dargestellt und beschrieben, bei welcher Rolle das Drehblockier-Eingriffsteil zur Zusammenwirkung mit einem Zahnkranz des Laufrades im Wesentlichen parallel zu einer Montagezapfenachse der Rolle ausgerichtet und verlagerbar ist, so weiter entsprechend bei üblicher Nutzung im Wesentlichen orientiert an einer vertikal ausgerichteten Linie. Das Drehblockier-Eingriffsteil ist im Nutzungszustand nach vertikal oben weisend angeordnet. Die auf das Eingriffsteil einwirkende Feder wirkt in der Eingriffsstellung beziehungsweise einer vorbereiteten Eingriffsstellung auf das Drehblockier-Eingriffsteil ein.

Aus der DE 202017102277 U1 ist eine Formschluss-Feststelleinrichtung bekannt, bei welcher die Wirkung einer zweiten Feder auf das Drehblockier-Eingriffsteil nur durch eine lineare Verlagerung eines Stößels aufhebbar ist. Die Bewegungsrichtung des Drehblockier-Eingriffsteils verläuft parallel zu der Bewegungsrichtung des Stößels.

Aus der US 2009/0113671 A1 ist eine Formschluss-Feststelleinrichtung bekannt, bei welcher eine Vorspannung es Drehblockier-Eingriffsteils in die Nicht-Eingriffsstellung durch eine unmittelbare Einwirkung eines Hebelfortsatzes auf das Teil erreicht ist.

Aus der EP 3103653 A1 ist es bekannt, dass ein Drehblockier-Eingriffsteil mit einer Reibschluss-Feststelleinrichtung kombiniert vorzusehen. Das Drehblockier-Eingriffsteil bewegt sich parallel zu einer Bewegungsrichtung des Stößels. Ein Schlitten, an dem sich ein Eingriffsteil befindet, bewegt sich zufolge Druckeinwirkung des Hebelteils und aufgrund von Schwerkraft.

### Zusammenfassung der Erfindung

Ausgehend von dem dargelegten Stand der Technik beschäftigt sich die Erfindung mit der Aufgabe, eine Formschluss-Feststelleinrichtung vorteilhaft auszubilden.

Diese Aufgabe ist beim Gegenstand des Anspruches 1 gelöst, wobei darauf abgestellt ist, dass der Winkel ein rechter oder spitzer Winkel ist, dass zufolge einer Drehverlagerung des Hebelteils entgegen der wirkenden Kraft der zweiten Feder eine Aufhebung der Kraft der zweiten Feder auf das Drehblockier-Eingriffsteil erfolgt, wobei das Drehblockier-Eingriffsteil nach der Aufhebung allein zufolge der unmittelbar auf dieses einwirkenden ersten Feder in Richtung auf die Eingriffsstellung verlagert wird, dass das Drehblockier-Eingriffsteil mit einer Reibschluss-Feststelleinrichtung kombiniert vorgesehen ist und dass das Hebelteil, das Drehblockier-Eingriffsteil und die erste und zweite Feder in einem gemeinsamen Halterungsteil angeordnet sind.

Das Drehblockier-Eingriffsteil ist entsprechend auch in der Nichteingriffsstellung mittelbar oder unmittelbar belastet, derart, dass das Drehblockier-Eingriffsteil durch eine in Richtung auf die Eingriffsstellung wirkende Feder auch in der Nichteingriffsstellung unter einer Vorspannung in die Eingriffsstellung steht. Das Drehblockier-Eingriffsteil ist stets, in jeder Stellung des Eingriffsteils, einer entladbaren Kraftreserve unterworfen.

Hieraus kann sich, wie auch bevorzugt, eine Verlagerung des Drehblockier-Eingriffsteils in die Eingriffsstellung allein zufolge Fortfall der Beaufschlagung des Drehblockier-Eingriffsteils durch die zweite Feder oder allein durch Verminderung der diesbezüglichen Federkraft erfolgen. Die Kraft der unmittelbar auf das Drehblockier-Eingriffsteil einwirkenden ersten Feder ist bei einem Fortfall oder einer entsprechenden Abnahme der Federkraft der zweiten Feder allein wirksam oder jedenfalls größer als eine gegebenenfalls noch wirkende reduzierte Kraft der zweiten Feder. Das Drehblockier-Eingriffsteil kann so unmittelbar allein zufolge Einwirkung der ersten Feder in die Eingriffsstellung verlagert werden.

Zur Rückverlagerung des Drehblockier-Eingriffsteils in die Nichteingriffsstellung wird entgegen der Kraft der ersten Feder eine Beaufschlagung des Drehblockier-Eingriffsteils über die zweite Feder herbeigeführt oder die Federkraft der zweiten Feder über einen Federkraftwert der ersten Feder hinaus erhöht. Die Kraft der zweiten Feder übersteigt hier die der ersten Feder, womit die Bewegungsrichtung des Drehblockier-Eingriffsteils von der in diesem Zustand dominierenden zweiten Feder vorgegeben wird. Die Kraft der zweiten Feder ist dabei so gewählt, dass auch etwaige Reibungskräfte, die einer Verlagerung des Eingriffsteils entgegenstehen, überwunden werden können.

Die Wirkung der zweiten Feder auf das Drehblockier-Eingriffsteil ist durch ein mit der zweiten Feder zusammenwirkendes Hebelteil aufhebbar. Die Wirkung der zweiten Feder auf das Drehblockier-Eingriffsteil kann zufolge dieser Ausgestaltung mittelbar gegeben sein, unter Zwischenschaltung des Hebelteils. Über das Hebelteil kann zufolge bevorzugter Schwenk- oder Schiebeverlagerung des Hebelteils die Einwirkung auf das Drehblockier-Eingriffsteil je nach Stellung des Hebelteils aufgehoben oder gegeben sein.

Die zweite Feder kann, wie auch bevorzugt, sowohl in der Eingriffsstellung als auch in der Nichteingriffsstellung des Drehblockier-Eingriffsteils wirksam das Hebelteil belasten, entsprechend dieses bevorzugt in beiden Stellungen unter Vorspannung stellen. Das Hebelteil ist bevorzugt stets in Richtung auf die Nichteingriffsstellung des Eingriffsteils vorgespannt.

Zufolge Verlagerung, insbesondere Drehverlagerung, des Hebelteils entgegen der wirkenden Kraft der zweiten Feder wird die Einwirkung der Kraft der zweiten Feder auf das Drehblockier-Eingriffsteil bevorzugt aufgehoben, welches Drehblockier-Eingriffsteil nach einer solchen Aufhebung bevorzugt allein zufolge der unmittelbar auf dieses einwirkenden ersten Feder in Richtung auf die Eingriffsstellung verlagert wird.

Das Hebelteil wird bevorzugt willensbetont durch eine aktive Verlagerung in die Freigabestellung bewegt. Die Rückverlagerung in die das Drehblockier-Eingriffsteil in der Nichteingriffsstellung haltende Stellung kann bevorzugt allein dadurch bewirkt sein, dass eine das Hebelteil in die das Eingriffsteil freigebende Stellung beaufschlagende Kraft aufgehoben ist. Es ist nicht zwingend, wenngleich dennoch möglich, das Hebelteil aktiv in die das Drehblockier-Eingriffsteil in die Nichteingriffsstellung verlagernde Stellung zu verbringen, beispielsweise durch eine willensbetonte Rückdrehverlagerung.

Das Hebelteil ist durch einen linear verfahrbaren Stößel beaufschlagbar. Ein solcher linear verfahrbarer Stößel kann beispielsweise innerhalb eines Montagezapfens der Rolle angeordnet sein, mit welchem Montagezapfen die Rolle beispielsweise an einem Fahrgestell festlegbar ist. So kann weiter eine Einrichtung vorgesehen sein, die auf den Stößel verlagernd einwirkt. In einer möglichen Ausgestaltung ist ein solcher Stößel entlang einer Montagezapfenachse, die in üblicher Nutzungsstellung der Rolle bevorzugt vertikal ausgerichtet ist, schiebeverlagerbar.

Die Einwirkung des Stößels auf das Hebelteil kann unmittelbar gegeben sein, alternativ unter Zwischenschaltung eines weiteren, kraftübertragenden Bauteils auch nur mittelbar.

Auch kann im Falle einer Schwenkrolle ein solcher Stößel abhängig vom Verlagerungsweg desselben zugleich oder auch alternativ eine Schwenkblockierung der Rolle auslösen.

Mit Bezug auf eine Projektionsebene, in welcher sich die geometrische Drehachse des Laufrades der Rolle als Punkt darstellt, schließt eine Bewegungsrichtung des Drehblockier-Eingriffsteils mit einer Bewegungsrichtung des Stößels einen Winkel ein. Der Winkel ist ein rechter oder spitzer Winkel. Weiter kann der Winkel insbesondere ein Winkel von mehr als 0°, so beispielsweise 0,5 oder 1° bis hin zu 80°, 85° oder auch 89,5°, weiter bis hin zu 90° sein.

In einer weiter möglichen Ausgestaltung kann eine in Bewegungsrichtung ausgerichtete und mit Bezug auf eine Projektion in die vorbeschriebene Ebene das Drehblockier-Eingriffsteil mittig durchsetzende Linie senkrecht zu der Bewegungsrichtung des Stößels verlaufen und somit hierzu einen im Wesentlichen rechten Winkel einschließend, wobei weiter diese Linie die geometrische Drehachse des Laufrades kreuzen kann.

In einer weiteren möglichen Ausgestaltung weist das Drehblockier-Eingriffsteil mit seinem zur Formschluss-Feststelleinwirkung wirksamen Ende in Laufrichtung des Laufrades.

Bei einem kombiniert mit einer Reibschluss-Feststelleinrichtung vorgesehenen Drehblockier-Eingriffsteil kann die Reibschluss-Feststelleinrichtung, wie bevorzugt, einen Bremsklotz aufweisen, der, ggf. angeordnet an dem linear verfahrbaren Stößel, in der Feststellstellung reibschlüssig auf die Laufrad-Lauffläche einwirkt.

Darüber hinaus können das Hebelteil und/oder das Drehblockier-Eingriffsteil und/oder die erste und/oder zweite Feder in einem gemeinsamen Halterungsteil angeordnet sein. Ein solches Halterungsteil kann wiederum gehaltert sein an der das Laufrad tragenden Gabel der Rolle.

Die beiden vorgesehenen Federn können bezüglich ihrer Gestaltung gleich gewählt sein. Lediglich die Federkraft der zweiten Feder ist höher, beispielsweise um den 1,5- bis 4-fachen, weiter beispielsweise etwa 2-fachen Wert gegenüber dem Wert der Federkraft der ersten Feder.

Darüber hinaus kann die erste Feder eine Zylinderdruckfeder sein, während die zweite Feder eine Schenkelfeder sein kann.

Die vor- und nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 1 bis 90° auch die Offenbarung von 1,1 bis 90°, 1 bis 89,9°, 1,1 bis 89,9° etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweiligen angegebenen Bereich dienen.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: eine Rolle in perspektivischer Darstellung;

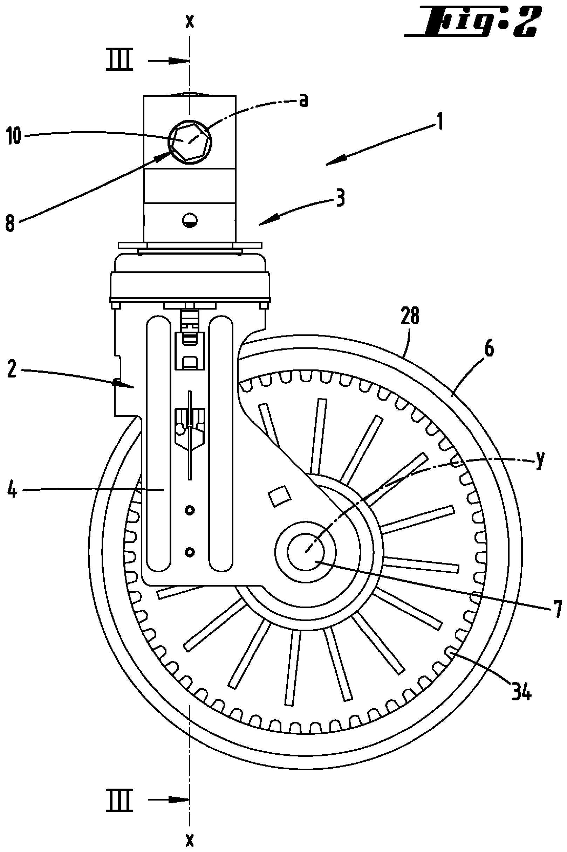

- Fig. 2: die Rolle in Seitenansicht;
- Fig. 3: den Schnitt gemäß der Linie III-III in Figur 2;

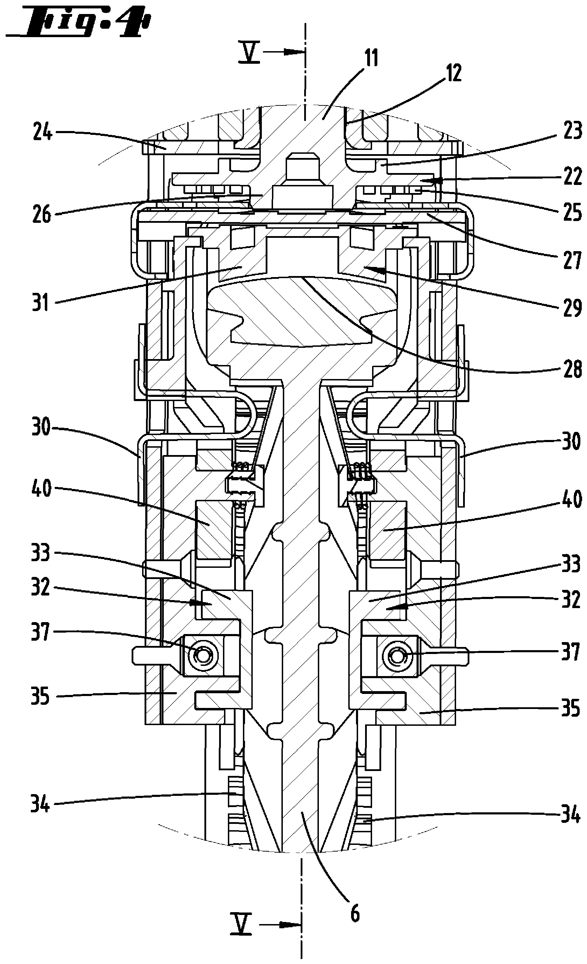

- Fig. 4: die Herausvergrößerung des Bereiches IV in Figur 3;
- Fig. 5: den Schnitt gemäß der Linie V-V in Figur 4;

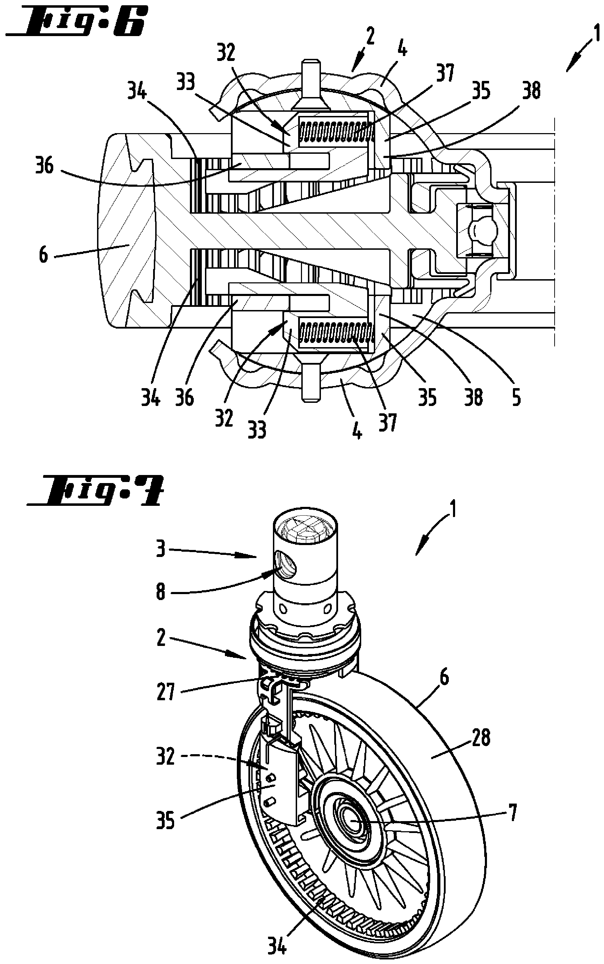

- Fig. 6: den Schnitt gemäß der Linie VI-VI in Figur 3 in vergrößerter Darstellung;
- Fig. 7: eine der Figur 1 entsprechende Darstellung, jedoch unter Fortlassung eines Gabelschenkels;
- Fig. 8: eine vergrößerte Seitenansichtsdarstellung gegen die Rolle unter Fortlassung des Gabelschenkels und eines Halterungsteils;
- Fig. 9: die Herausvergrößerung des Bereiches IX in Figur 8, betreffend eine Nichteingriffsstellung eines Drehblockier-Eingriffsteils;
- Fig. 10: eine der Figur 9 entsprechende Darstellung, jedoch die Eingriffsstellung betreffend;

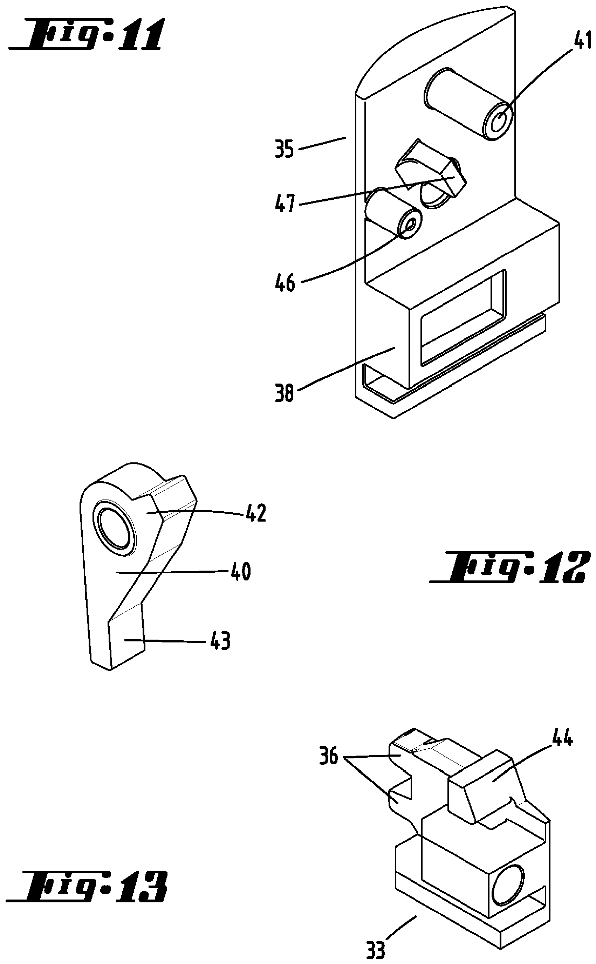

- Fig. 11: in perspektivischer Einzeldarstellung das Halterungsteil;
- Fig. 12: in perspektivischer Einzeldarstellung ein Hebelteil;
- Fig. 13: in perspektivischer Einzeldarstellung das Eingriffsteil.

### Beschreibung der Ausführungsformen

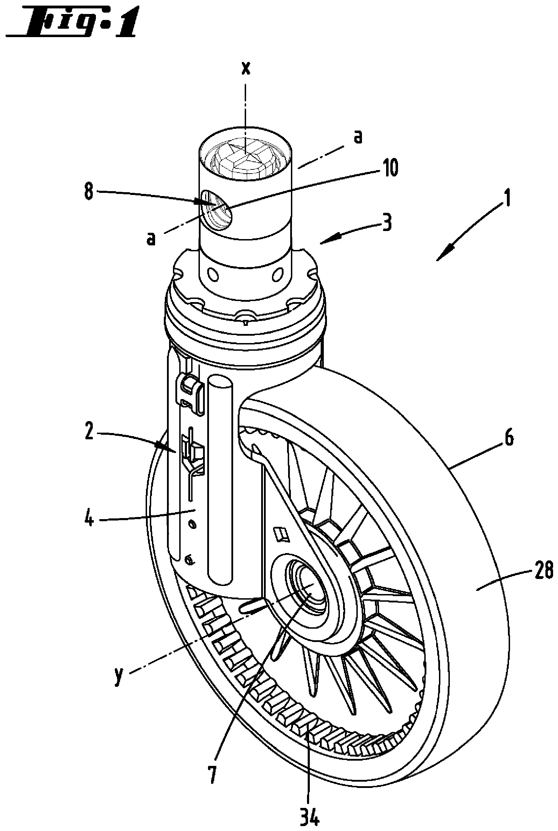

Dargestellt und beschrieben ist, zunächst mit Bezug zu Figur 1, eine Rolle 1, hier bevorzugt in Art einer Lenkrolle gebildet. Die Rolle, gegebenenfalls die Lenkrolle kann eine Laufrollengabel 2, von welcher ein zylinderförmig ausgestalteter Montagezapfen 3 ausgehen kann, aufweisen. Der Montagezapfen 3 kann eine Schwenkachse x umgebend bezüglich des Laufrades vertikal nach oben abragen. Die Laufrollengabel 2 kann mit ihrem bevorzugt deckungsgleich gegenüberliegend angeordneten Gabelschenkel 4 ein in einer gegebenenfalls vorgesehenen Gabelhöhlung 5 gelagertes Laufrad 6 umfassen. Zur Lagerung des Laufrades 6 kann in dem dargestellten Ausführungsbeispiel eine Hohlachse 7 dienen, welche das Laufrad 6 zentrisch durchsetzend jeweils endseitig an den Gabelschenkeln 4 gehaltert sein kann. Die geometrische Drehachse y des Laufrades 6 erstreckt sich bevorzugt und im Wesentlichen quergerichtet zu der Schwenkachse x.

Die dargestellte Rolle 1 kann beispielsweise an einem Krankenhausbett oder dergleichen positioniert sein. Die Festlegung kann in üblicher Weise unter Nutzung des Montagezapfens 3 erfolgen und ist hier deshalb nicht näher beschrieben.

In dem Montagezapfen 3 kann weiter an bekannter Stelle ein um eine Betätigungsachse a schwenkbeweglich angeordneter Schaltnocken 8 vorgesehen sein. Hierbei kann sich die Betätigungsachse a rechtwinklig zu der Schwenkachse x der Rolle 1 ausgerichtet erstrecken. Die Fixierung des Schaltnockens 8 innerhalb des Montagezapfens 3 kann in bekannter Weise dadurch gegeben sein, dass eine um eine Schwenkachse x ausgerichtete Befestigungshülse 9 vorgesehen ist. Zur Drehmitnahme des Schaltnockens 8 kann der Schaltnocken 8 eine zentrisch angeordnete unrunde Kupplungsöffnung 10 besitzen, welche von einem nicht dargestellten Schalthebelschaft zur Betätigung durchsetzt sein kann.

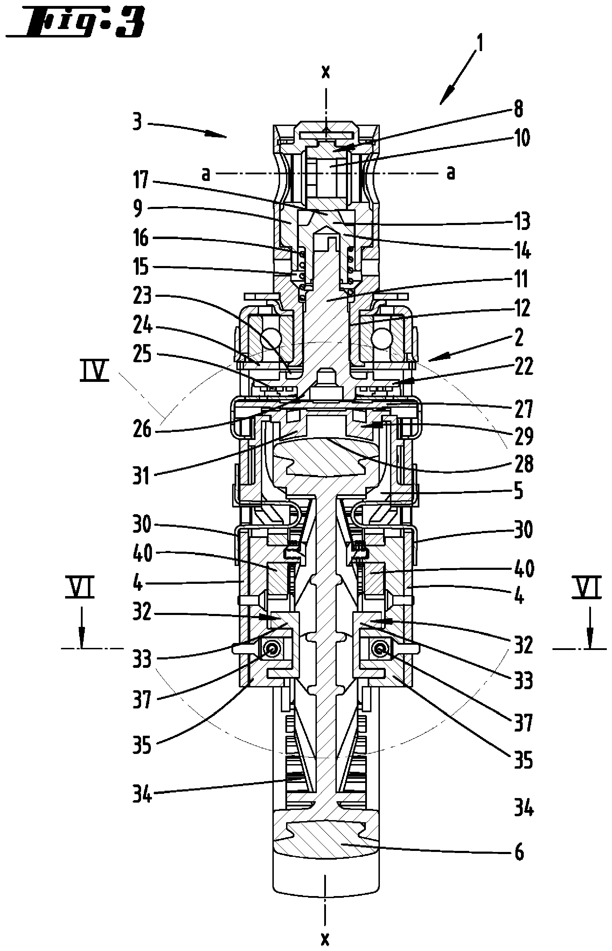

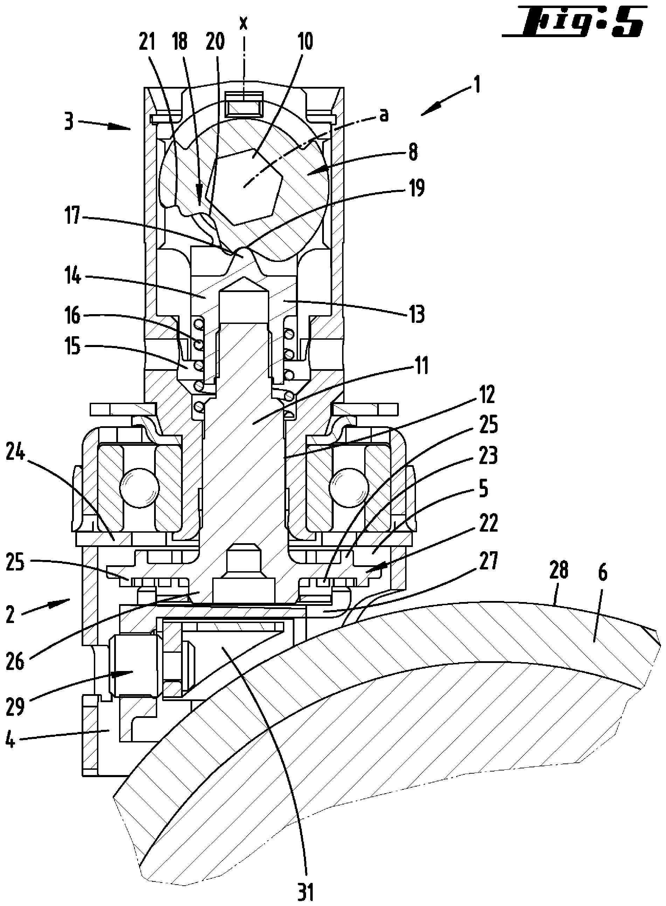

Bezogen auf die Darstellungen beispielsweise in Figur 3 und 5 ist unterhalb des Schaltnockens 8 ein Stößel 11 vorgesehen. Dieser ist bevorzugt um die Schwenkachse x ausgerichtet vertikal in dem Montagezapfen 3 verlagerbar. Der Montagezapfen 3 kann einen bevorzugt auch um die Schwenkachse x ausgerichteten durchmesserreduzierten Gang 12 aufweisen, der querschnittsmäßig angepasst sein kann an den Stößel 11. Der Stößel 11 kann innerhalb des Montagezapfens 3 drehgesichert sein.

Wie insbesondere die Darstellung in Figur 5 zeigt, kann das zwischen der Öffnung des Ganges 12 und dem Schaltnocken 8 angeordnete freie Ende des Stößels 11 mit einem Nockenteil 13 schraubverbunden sein. Das Nockenteil 13 kann hierbei bevorzugt eine topfartige Gestalt mit einem weiter bevorzugt kreisrundem Querschnitt aufweisen, wobei an dem dem Stößel 11 abgewandten Ende ein durchmesservergrößerter Bereich als Ringkragen 14 ausgebildet sein kann. Darüber hinaus ist das Nockenteil 13 des Stößels 11 innerhalb des Montagezapfens 3 bezogen auf die Darstellungen bevorzugt vertikal geführt. Hierzu kann der Montagezapfen 3 eine die Schwenkachse x umgebende und dem Durchmesser des gegebenenfalls vorgesehenen Ringkragens 14 angepasste Höhlung 15 aufweisen. Darüber hinaus kann der gegenüber dem Ringkragen 14 durchmesserreduzierte Abschnitt des Nockenteils 13 von einer Druckfeder 16 umgeben sein, wobei sich das eine Ende der Druckfeder 16 an der Unterseite des Ringkragens 14 abstützen kann. Das andere gegenüberliegende Federende kann sich an einem Rand des Ganges 12 abstützen. Somit kann vorgesehen sein, dass der Stößel 11 in Richtung des Schaltnockens 8 mittels der Druckfeder 16 federkraftbelastet ist. Darüber hinaus kann auch die dem Schaltnocken 8 zugewandte Stirnfläche des gegebenenfalls vorgesehenen Ringkragens 14 eine zentrische Ausformung in Form eines Gegennockens 17 aufweisen.

Der gegebenenfalls vorgesehene Gegennocken 17 kann mit der zugewandten Steuerfläche 18 des Nockenteils 3 zusammenwirken, welche Steuerfläche 18 sich im Wesentlichen aus beispielsweise drei in Umfangsrichtung des Schaltnockens 8 hintereinander angeordneten, bezüglich des radialen Abstandes zu der Betätigungsachse a unterschiedlich tiefen Bereichen, gegebenenfalls in Form von Steuermulden 19, 20 und 21, zusammensetzen kann.

Der Stößel 11 erstreckt sich in Richtung auf das Laufrad 6 gesehen bevorzugt in Richtung der Gabelhöhlung 5 oder bis in diese hinein. Die Gabelhöhlung 5 umgibt bevorzugt eine im Querschnitt kreisrunde Ausformung des Stößels 11. Diese Ausformung kann durchmessergrößer sein als ein oberer Bereich des Stößels 11. Die Ausformung kann die Funktion eines Rasttellers 22 übernehmen, welcher die Schwenkachse x umgebend quer zu dieser an dem Stößel 11 dann ausgeformt sein kann.

Der Rastteller 22 kann auf seiner auch dem Schaltnocken 8 zugewandten Tellerfläche Rastausformungen, insbesondere rippenartig ausgebildete Rastausformungen 23 aufweisen. Die Rastausformungen 23 können in einer Lenkrolleneinstellung bedingt durch die Federkraft der Druckfeder 16 flächig gegen die Unterseite eines Richtungs-Feststellungsteils 24 gedrückt sein. Das Richtungs-Feststellungsteil kann an der Gabel 2 festgelegt sein. Die Lenkrolleneinstellung kann durch Verdrehen des Montagezapfens 3 in einer Zusammenwirkstellung des Gegennockens 17 des Stößels 11 und Steuermulde 20, oder einer sonstigen gleichwertigen Ausformung, einnehmbar sein. Die Lenkrolleneinstellung kann gegenüber der in Figur 5 dargestellten Neutralstellung zufolge der gegebenen Federkraftbeaufschlagung mit Bezug zu den Figuren ein Anheben des Nockenteils 13 und des Stößels 11, gegebenenfalls mit dessen Rastteller 22, ermöglichen.

An der den Rastausformungen 23 abgewandten Unterseite des Rasttellers 22 kann der Stößel 11 Dreh-Blockierungsvorsprünge 25 besitzen. Diese können koaxial zu der Schwenkachse x jeweils in Umfangsrichtung des Rasttellers 22 verlaufen und können etwa eine zylinderförmige Gestalt aufweisen.

Von dem Rastteller 22 kann dem Stößel 11 in Richtung des Laufrades 6 gesehen ein gegenüber dem Rastteller 22 durchmesserreduzierter, kreisrunder, zylinderförmiger Fortsatz 26 entspringen, welcher seinerseits in einer zentrisch angeordneten Durchtrittsöffnung eines um die Schwenkachse x angeordneten Dreh-Blockierungsteils 27 führungstechnisch einliegen kann. Das zwischen dem Laufrad 6 und dem Rastteller 22 in der Gabelhöhlung 5 einliegende Dreh-Blockierungsteil 27 kann ebenfalls wie das Richtungs-Feststellungsteil 24 drehfest an der Gabel 2 gehaltert und beispielsweise als Stanzbiegeteil ausgebildet sein.

Das Dreh-Blockierungsteil 27 kann an die Geometrie der Dreh-Blockierungsvorsprünge 25 angepasste Blockierungsaufnahmen aufweisen.

Zufolge Zusammenwirkung von Dreh-Blockierungsvorsprüngen 25 des Rasttellers 22 und Blockierungsaufnahmen in dem Dreh-Blockierungsteil 27 kann die Rolle 1 in unterschiedlichen Schwenkpositionen um die Schwenkachse x festlegbar sein. Hierzu kann der Schaltnocken 1 in eine Position um dessen Betätigungsachse a zu schwenken sein, in welcher die Steuermulde 21 in Wirkstellung zu dem Gegennocken 17 treten kann. Der Gegennocken 17 kann zusammen mit dem Stößel 11 entgegen der Kraft der Druckfeder 16 mit Bezug auf die Darstellungen nach unten bewegt werden. Die Dreh-Blockierungsvorsprünge 25 können schwenkhindernd in die zugeordneten Blockierungsaufnahmen eingreifen.

Zugleich kann in dieser Stellung auch eine Drehfeststellung des Laufrades 6 erreicht sein. Hierzu kann der Fortsatz 26 des Stößels 11 zunächst eine in der Gabelhöhlung 5 oberhalb des Laufrades 6 angeordnete Reibschluss-Feststelleinrichtung 29 beaufschlagen. Diese Reibschluss-Feststelleinrichtung 29 kann an den Gabelschenkeln 4 gelagert und geführt sein, wobei die Reibschluss-Feststelleinrichtung 29 bei Absenkung des Stößels 11 zufolge Anordnung von Haarnadelfedern 30 federvorgespannt sein kann. Das eigentliche Feststellelement für das Laufrad 6 kann ein in der Feststelleinrichtung 29 angeordneter Bremsklotz 31 sein, welcher bei Abwärtsverlagerung auf die Lauffläche 28 des Laufrades 6 drehblockierend einwirken kann.

Bezüglich der wesentlichen Ausgestaltung der Rolle 1, insbesondere hinsichtlich der Ausgestaltung und Anordnung des Stößels 11 mit dessen Nockenteil 13, sowie des Rasttellers 22, des Richtungs-Feststellungsteils 24, des Dreh-Blockierungsteils 27 sowie der Reibschluss-Feststelleinrichtung 29, darüber hinaus auch bezüglich der Wirkungsweise wird auf die EP 1 778 504 B1 verwiesen. Der Inhalt dieser Patentschrift wird hiermit vollinhaltlich in die Offenbarung vorliegender Erfindung mit einbezogen, auch zu dem Zweck, Merkmale dieser Patentschrift in Ansprüche vorliegender Erfindung mit einzubeziehen.

Zusätzlich zu der vorbeschriebenen Reibschluss-Feststelleinrichtung 29 kann die Rolle 1 mit einer Formschluss-Feststelleinrichtung 32 versehen sein. Diese kann ein Drehblockier-Eingriffsteil 33 aufweisen, zur bevorzugten Zusammenwirkung mit einer laufradinnenseitig vorgesehenen, umlaufenden Verzahnung 34.

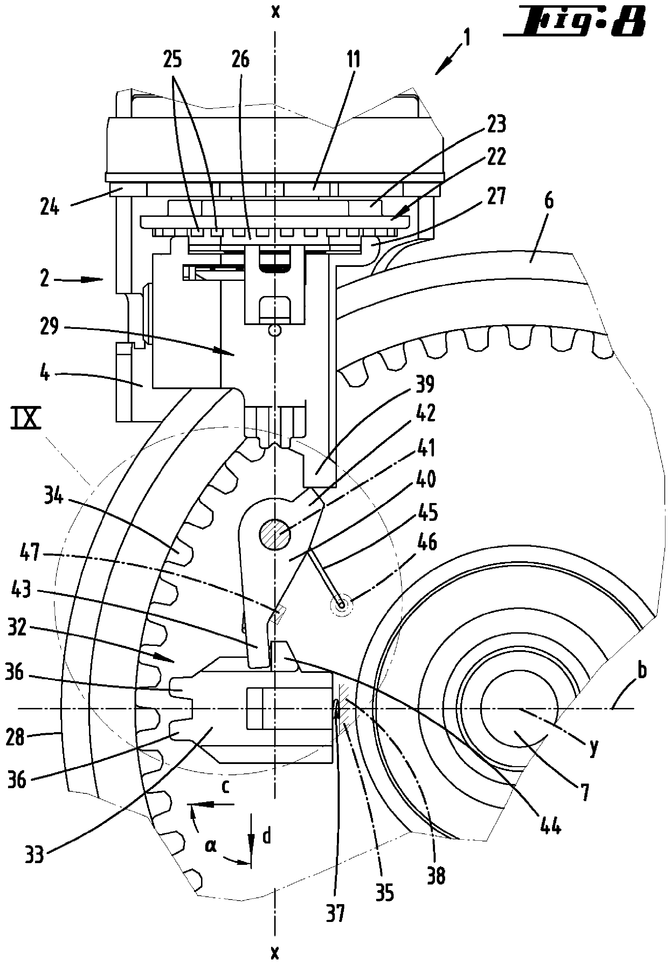

Das Drehblockier-Eingriffsteil 33 kann in einem gabelschenkelseitig festgelegten Halterungsteil 35 schiebebeweglich gelagert sein. Die Ausrichtung kann hierbei so gewählt sein, dass das Eingriffsteil 33 entlang einer in einer Seitenansicht gemäß Figur 8 senkrecht zur Schwenkachse x ausgerichteten und die Drehachse y des Laufrades 6 querenden Linie b bewegbar sein kann. Es kann sich entsprechend mit Bezug zu der Drehachse y des Laufrades 6 um eine radiale Ausrichtung der Bewegungsrichtung c des Eingriffsteiles 33 handeln.

In weiter bevorzugter Ausgestaltung kann mit Bezug auf eine Projektion in eine Ebene, in welcher die Drehachse y sich als Punkt darstellt, entsprechend etwa der Darstellung in Figur 8, das Eingriffsteil 33 sowohl in einer Eingriffsstellung wie auch in einer Nichteingriffsstellung bezüglich der Verzahnung 34 so angeordnet sein, dass dieses von der geometrischen Schwenkachse x gekreuzt werden kann.

Die Bewegungsrichtung d des Stößels 11 kann zu der Bewegungsrichtung c des Drehblockier-Eingriffsteils 33 in dem dargestellten Ausführungsbeispiel einen rechten Winkel α einschließen.

Zugewandt der Verzahnung 34 kann das Drehblockier-Eingriffsteil 33 zwei zueinander beabstandete, in ihrem Abstand und in ihrer Ausgestaltung an die Verzahnung 34 angepasste Sperrzähne 36 ausformen.

In Richtung auf die Eingriffsstellung kann das Drehblockier-Eingriffsteil 33 federbelastet sein. Hierzu kann eine erste Feder 37, bevorzugt ihn Form einer Zylinderdruckfeder, vorgesehen sein, die sich einerends an dem Eingriffsteil 33 abstützen kann und anderenends bevorzugt an einem zugewandten Abschnitt 38 des Halterungsteiles 35, hierbei bevorzugt in dem Halterungsteil 35 einliegend.

Die Reibschluss-Feststelleinrichtung 29 kann mit einem mit Bezug auf die Darstellungen nach unten abragenden Fortsatz 39 versehen sein, welcher seitlich im Bereich des jeweiligen Gabelschenkels 4 an dem Laufrad 6 vorbeigeführt sein kann.

Über diesen Fortsatz 39 kann in der Totalfeststellung der Rolle 1, in welcher auch eine Drehfeststellung des Laufrades 6 erreicht sein kann, ein ebenfalls in dem Halterungsteil 35 schwenkbar angeordnetes Hebelteil 40 beaufschlagt sein. Dieses Hebelteil 40 kann in dem Halterungsteil 35 um einen halterungsteilseitig vorgesehenen Zapfen 41 schwenkverlagerbar sein. Die diesbezügliche Schwenkachse kann sich in Parallelausrichtung zur Drehachse y des Laufrades 6, hierbei mit Bezug auf die vorerwähnte Projektion gegebenenfalls die Schwenkachse x kreuzend, erstrecken.

Das Hebelteil 40 kann zugewandt dem feststelleinrichtungsseitigen Fortsatz 39 mit einem Ausleger 42 versehen sein. Dieser kann in bevorzugter Ausgestaltung stets in Anlage an dem Fortsatz 39 sein.

Mit Bezug zu dem Zapfen 41 gegenüberliegend zu dem Ausleger 42 kann an dem Hebelteil 40 weiter ein Steuerarm 43 angeformt sein. Dieser kann mit Bezug zu den Darstellungen im Wesentlichen nach unten in Richtung auf das Drehblockier-Eingriffsteil 33 ragen, wozu an dem Eingriffsteil 33 eine entsprechend positionierte Schulter 44 angeformt sein kann.

Dem Hebelteil 40 kann eine zweite Feder 45 zugeordnet sein, bevorzugt eine Schenkelfeder, deren Federkraft größer gewählt sein kann als die der ersten Feder 37.

Die zweite Feder 45 kann sich mit einem Federschenkel in einer Aufnahme 46 des Halterungsteiles 35 abstützen, während der andere Federschenkel sich unter Federbelastung des Hebelteils 40 mit Bezug zu den Darstellungen entgegen dem Uhrzeigersinn an einer Flanke des Hebelteils 40 abstützen kann.

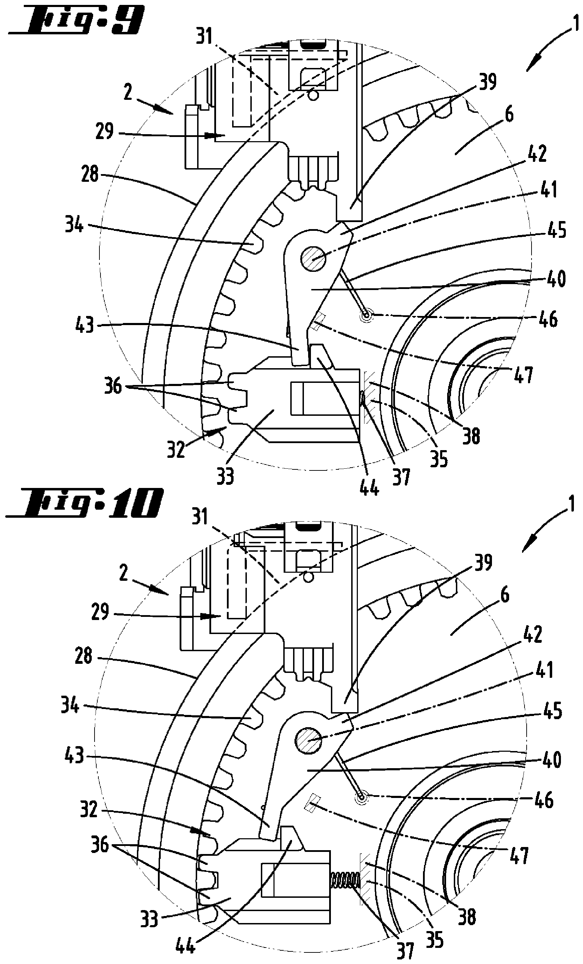

Weiter kann die zweite Feder 45 auf das Hebelteil 40 derart einwirken, dass eine Belastung des Drehblockier-Eingriffsteils 33 über die Zusammenwirkung von Steuerarm 43 und Schulter 44 in Richtung auf die Nichteingriffsstellung gemäß den Figuren 8 und 9 erreicht sein kann.

In der Grundstellung gemäß den Darstellungen in den Figuren 8 und 9, die auch anschlagbegrenzt sein kann, beispielsweise durch einen halterungsteilseitigen Zapfen 47, gegen welchen das Hebelteil 40 anschlagen kann, welche Grundstellung entweder der Neutralstellung der Rolle 1 gemäß der Schaltnockenstellung in Figur 5 entsprechen kann oder auch der Bockrollenstellung, kann das Drehblockier-Eingriffsteil 33 entgegen der Kraft der auf das Eingriffsteil 33 einwirkenden ersten Feder 37 durch das Hebelteil 40 zufolge der größeren Kraft der zweiten Feder 45 in der Nichteingriffsstellung gehalten sein.

Erst die Verlagerung des Stößels 11 nach unten in Richtung auf die Totalfeststellung bei entsprechender Drehung des Schaltnockens 8 kann neben der Schwenkfeststellung und der Aktivierung der Reibschluss-Feststell-einrichtung 29 über die Zusammenwirkung von Fortsatz 39 und Ausleger 42 des Hebelteils 40 eine Schwenkverlagerung des Hebelteils 40 entgegen der Kraft der dieses beaufschlagenden zweiten Feder 45 bewirken (gemäß den Darstellungen in Uhrzeigerrichtung). Der entsprechend abschwenkende Steuerarm 43 kann eine Verlagerung des Drehblockier-Eingriffsteils 33 in dessen Bewegungsrichtung c aufgrund der auf dieses Teil einwirkenden Federkraft der ersten Feder 37 zulassen (vgl. Figur 10).

Die Sperrzähne 36 können gegebenenfalls unmittelbar in die Zahnlücken der Verzahnung 34 eingreifen, so dass zusätzlich zu der Reibschlussfeststellung eine Formschlussfeststellung wirken kann.

Je nach Stellung des Laufrades 6 in Umfangsrichtung können mit Auslösung der Totalfeststellung die Sperrzähne 36 des Drehblockier-Eingriffsteils 33 gegebenenfalls auf die Zähne der Verzahnung 34 stoßen. Durch die gegebene Kraftreserve der auch in der Eingriffsstellung bevorzugt weiterhin vorgespannten ersten Feder 37 kann durch eine nachträgliche Drehverlagerung des Laufrades 6 um einen oder zwei Winkelgrade ein selbsttätiges Einfahren des Eingriffsteils 33 in die Sperrstellung weiterhin gegeben sein.

Im Zuge der Aufhebung der Totalfeststellung kann der Stößel 11 angehoben sein. Entsprechend kann der Rastteller 22 aus der Schwenkfestlegungsstellung angehoben und die Beaufschlagung der Formschluss-Feststelleinrichtung 32 über den Fortsatz 26 des Stößels 11 aufgehoben sein. Die Reibschluss-Feststelleinrichtung 29 kann über die Haarnadelfedern 30 aus der Reibschlussstellung heraus angehoben sein. Zugleich kann das Hebelteil 40 der Formschluss-Feststelleinrichtung 32 die aussteuernde Belastung über den Fortsatz 39 verlieren. Das Hebelteil 40 kann zufolge der Krafteinwirkung der zweiten Feder 45, bevorzugt unter Mitschleppen des Drehblockier-Eingriffsteils 33 über die Schulter 44 zurückschwenken in die gegebenenfalls anschlagbegrenzte Grundstellung, in welcher Grundstellung, die der Nichteingriffsstellung entsprechen kann, die erste, das Eingriffsteil 33 beaufschlagende Feder 37 in Vorspannung gehalten sein kann.

**Liste der Bezugszeichen**

| | | | |
|---|---|---|---|
| 1 | Rolle | 29 | Reibschluss-Feststelleinrichtung |
| 2 | Laufrollengabel | 30 | Haarnadelfeder |
| 3 | Montagezapfen | 31 | Bremsklotz |
| 4 | Gabelschenkel | 32 | Formschluss- |
| 5 | Gabelhöhlung | | Feststelleinrichtung |
| 6 | Laufrad | 33 | Drehblockier-Eingriffsteil |
| 7 | Hohlachse | 34 | Verzahnung |
| 8 | Schaltnocken | 35 | Halterungsteil |
| 9 | Befestigungshülse | 36 | Sperrzahn |
| 10 | Kupplungsöffnung | 37 | erste Feder |
| 11 | Stößel | 38 | Abschnitt |
| 12 | Gang | 39 | Fortsatz |
| 13 | Nockenteil | 40 | Hebelteil |
| 14 | Ringkragen | 41 | Zapfen |
| 15 | Höhlung | 42 | Ausleger |
| 16 | Druckfeder | 43 | Steuerarm |
| 17 | Gegennocken | 44 | Schulter |
| 18 | Steuerfläche | 45 | zweite Feder |
| 19 | Steuermulde | 46 | Aufnahme |
| 20 | Steuermulde | 47 | Zapfen |
| 21 | Steuermulde | | |
| 22 | Rastteller | | |
| 23 | Rastausformung | | |
| 24 | Richtungs-Feststellungsteil | | |
| 25 | Dreh-Blockierungsvorsprung | | |
| 26 | Fortsatz | | |
| 27 | Dreh-Blockierungsteil | α | Winkel |
| 28 | Lauffläche | | |
| a | Betätigungsachse | | |
| b | Linie | | |
| c | Bewegungsrichtung | | |
| d | Bewegungsrichtung | | |
| x | Schwenkachse | | |
| y | Drehachse | | |

## Patentansprüche

1. Formschluss-Feststelleinrichtung (32) für eine Rolle (1), mit einem Laufrad (6), einer Gabel (2) und einem Drehblockier-Eingriffsteil (33), wobei das Laufrad (6) der Rolle (1) mit Bezug auf eine geometrische Laufradachse über die Formschluss-Feststelleinrichtung (32) drehbockierbar ist, wobei weiter das Drehblockier-Eingriffsteil (33) mittels einer ersten Feder (37) in eine Eingriffsstellung vorgespannt ist, wobei die erste Feder (37) eine Vorspannung auf das Drehblockier-Eingriffsteil (33) sowohl in der Eingriffs- als auch in einer Nichteingriffsstellung ausübt und eine Vorspannung in die Nichteingriffsstellung durch Beaufschlagung des Drehblockier-Eingriffsteils (33) mittels einer zweiten Feder (45) erreicht ist, wobei die Wirkung der zweiten Feder (45) auf das Drehblockier-Eingriffsteil (33) durch ein mit der zweiten Feder (45) zusammenwirkendes Hebelteil (40) aufhebbar ist, das durch einen linear verfahrbaren Stößel (11) beaufschlagbar ist, und eine Bewegungsrichtung (c) des Drehblockier-Eingriffsteils (33) mit einer Bewegungsrichtung (d) des Stößels (11) einen Winkel (α) einschließt, **dadurch gekennzeichnet, dass** der Winkel (α) ein rechter oder spitzer Winkel ist, dass zufolge einer Drehverlagerung des Hebelteils (40) entgegen der wirkenden Kraft der zweiten Feder (45) eine Aufhebung der Kraft der zweiten Feder (45) auf das Drehblockier-Eingriffsteil (33) erfolgt, wobei das Drehblockier-Eingriffsteil (33) nach der Aufhebung allein zufolge der unmittelbar auf dieses einwirkenden ersten Feder (37) in Richtung auf die Eingriffsstellung verlagert wird, dass das Drehblockier-Eingriffsteil (33) mit einer Reibschluss-Feststelleinrichtung (29) kombiniert vorgesehen ist und dass das Hebelteil (40), das Drehblockier-Eingriffsteil (33) und die erste und zweite Feder (37,45) in einem gemeinsamen Halterungsteil (35) angeordnet sind.

2. Formschluss-Feststelleinrichtung nach Anspruch 1, **dadurch gekennzeichnet, dass** die erste Feder (37) eine Zylinderdruckfeder ist.

3. Formschluss-Feststelleinrichtung nach einem der vorhergehenden Ansprüche, **dadurch gekennzeichnet, dass** die zweite Feder (45) eine Schenkelfeder ist.

## Claims

1. Formfitting securing device (32) for a roller (1), comprising a running wheel (6), a fork (2), and a rotation-blocking engagement part (33), wherein running wheel (6) of the roller (1) may be rotationally blocked with respect to the geometric running wheel axis via the formfitting securing device (32), wherein the rotation-blocking engagement part (33) is additionally biased into an engagement position by means of a first spring (37), wherein the first spring (37) exerts a bias on the rotation-blocking engagement part (33), both in the engaged position and also in a non-engaged position, and a bias is achieved in the non-engaged position by means of a second spring (45) acting on the rotation-blocking engagement part (33), wherein the effect of the second spring (45) on the rotation-blocking engagement part (33) is releasable by a lever part (40) interacting with the second spring (45), said lever part can be acted upon by a linearly displaceable tappet (11), and a movement direction (c) of the rotation-blocking engagement part (33) defines an angle (α) with a movement direction (d) of the tappet (11), **characterized in that** the angle (α) is a right angle or an acute angle, that a release of the force of the second spring (45) on the rotation-blocking engagement part (33) is carried out as a result of a rotational displacement of the lever part (40) counter to the acting force of the second spring (45), wherein the rotation-blocking engagement part (33) is displaced after such a release in the direction of the engagement position, solely as a result of the first spring (37) acting directly on the same, that the rotation-blocking engagement part (33) is provided in combination with a friction locking device (29), and that the lever part (40), the rotation-blocking engagement part (33), and the first and second springs (37, 45) are arranged in a mutual holding part (35).

2. Formfitting securing device according to claim 1, **characterized in that** the first spring (37) is a cylindrical compression spring.

3. Formfitting securing device according to one of the preceding claims, **characterized in that** the second spring (45) is a leg spring.

## Revendications

1. Dispositif de blocage à complémentarité de forme (32) pour une roulette (1), comprenant une roue de roulement (6), une fourche (2) et un élément d'engagement de blocage de rotation (33), dans lequel la roue de roulement (6) de la roulette (1) peut être bloquée en rotation par rapport à un axe géométrique de la roue de roulement par le biais du dispositif de blocage à complémentarité de forme (32), dans lequel en outre l'élément d'engagement de blocage de rotation (33) est sollicité dans une position engagée au moyen d'un premier ressort (37), dans lequel le premier ressort (37) exerce une sollicitation sur l'élément d'engagement de blocage de rotation (33) à la fois dans la position engagée et dans une position désengagée et une sollicitation dans la position désengagée est obtenue en agissant sur l'élément d'engagement de blocage de rotation (33) au moyen d'un deuxième ressort (45), dans lequel l'action du deuxième ressort (45) sur l'élément d'engagement de blocage de rotation (33) peut être supprimée par un élément de levier (40) qui coopère avec le deuxième ressort (45) et qui peut être actionné par un poussoir (11) déplaçable linéairement, et une direction de déplacement (c) de l'élément d'engagement de blocage de rotation (33) forme un angle (α) avec une direction de déplacement (d) du poussoir (11), **caractérisé en ce que** l'angle (α) est un angle droit ou aigu, **en ce qu'**une suppression de la force du deuxième ressort (45) sur l'élément d'engagement de blocage de rotation (33) se produit par suite d'un déplacement en rotation de l'élément de levier (40) à l'encontre de la force d'action du deuxième ressort (45), dans lequel après la suppression, l'élément d'engagement de blocage de rotation (33) est déplacée dans la direction de la position engagée du seul fait de l'action directe du premier ressort (37) sur celui-ci, **en ce que** l'élément d'engagement de blocage de rotation (33) est prévu en combinaison avec un dispositif de blocage par friction (29) et **en ce que** l'élément de levier (40), l'élément d'engagement de blocage de rotation (33) et les premier et deuxième ressorts (37, 45) sont agencés dans un élément de maintien commun (35).

2. Dispositif de blocage à complémentarité de forme selon la revendication 1, **caractérisé en ce que** le premier ressort (37) est un ressort de compression cylindrique.

3. Dispositif de blocage à complémentarité de forme selon l'une des revendications précédentes, **caractérisé en ce que** le deuxième ressort (45) est un ressort de torsion.
